# EUROPÄISCHE PATENTSCHRIFT

(11) **EP 0 580 946 B1**
(45) Veröffentlichungstag und Bekanntmachung des Hinweises auf die Patenterteilung: **22.05.1996**
(21) Anmeldenummer: 93104214.7
(22) Anmeldetag: 16.03.1993
(51) Int. Cl.: F28D 20/00

(54) **Wärmespeicher, insbesondere Latentwärmespeicher**
Heat storage device, especially latent heat storage device
Accumulateur thermique, en particulier accumulateur de chaleur latente

(30) Priorität: 28.07.1992 DE 4224873
(43) Veröffentlichungstag der Anmeldung: 02.02.1994
(73) Patentinhaber: Längerer & Reich GmbH & Co., D-70790 Filderstadt (DE)
(72) Erfinder: Strähle, Roland, Dipl.-Ing. (FH), W-7441 Unterensingen (DE); Hörz, Stephan, Dipl.-Ing. (FH), W-7024 Filderstadt (DE); Letsch, Jochen, W-7000 Stuttgart 60 (DE)
(74) Vertreter: Kratzsch, Volkhard, Dipl.-Ing.

(56) Entgegenhaltungen:
- EP-A- 0 186 515
- DE-A- 3 015 257
- DE-A- 4 007 001
- DE-B- 1 067 541

## Beschreibung

Die Erfindung bezieht sich auf einen Wärmespeicher, insbesondere Latentwärmespeicher, der im Oberbegriff des Anspruchs 1 genannten Art.

Bei einem bekannten Wärmespeicher dieser Art (DE-A 40 07 004) ist die Einrichtung, mittels der Wärmeverlusten durch die Leitungen entgegengewirkt wird, dadurch gebildet, daß im Inneren der Leitung konvektionshemmende Vorrichtungen oder eine Wärmeisolation durch eine wärmeisolierende Schicht, z.B. aus Schaumstoff, an der Innenwandung der Leitung angeordnet sind. In das Innere der Leitungen einzuführende konvektionshemmende Vorrichtungen, z.B. spiralförmige Elemente od. dgl. Einsätze, sind kostenaufwendig und stehen einer fertigungstechnisch günstigen Lösung entgegen. Eine der Wärmeisolation auf der Innenseite der Leitungen dienende Isolierschicht reduziert die Wärmeverluste nur geringfügig. Besonders dann, wenn zur Erzielung einer Thermosiphonwirkung die Leitungen zumindest annähernd vertikal verlaufen müssen und dann mit einem Rohrknie in die Innenhülle einmünden, ergeben sich zudem auch für die Einbringung der inneren Wärmeisolation fertigungstechnische Schwierigkeiten.

Es ist ein Warmwasserkessel bekannt (DE-A-30 15 257), bei dem die von einer Wärmepumpe zum Warmwasserkessel führenden Verbindungsleitungen außerhalb der Kesselwand durchgetrennt sind, wobei in die Trennstelle zwischen zwei beabstandeten Rohrabschnitten ein elektrisch isolierendes Trennstück gas- und flüssigkeitsdicht eingesetzt ist. Durch eine solche galvanische Trennung sollen schädliche Korrosionsströme verhindert werden.

Der Erfindung liegt die Aufgabe zugrunde, einen Wärmespeicher, insbesondere Latentwärmespeicher, der im Oberbegriff des Anspruchs 1 genannten Art zu schaffen, bei dem die durch die Zufluß- und Abflußleitungen verursachten Wärmeverluste in möglichst einfacher, fertigungstechnisch günstiger Weise noch weiter reduziert werden können.

Die Aufgabe ist bei einem Wärmespeicher, insbesondere Latentwärmespeicher, der eingangs genannten Art gemäß der Erfindung durch die Merkmale im Kennzeichnungsteil des Anspruchs 1 gelöst. Dadurch ist erreicht, daß sich metallische Leitungen, die einer Lötverbindung mit der Innenhülle zugänglich sind, verwenden lassen und dennoch die Wärmeverluste beim Wärmetransport vom Speicherkern nach außen noch wesentlich geringer gehalten werden können. Durch die Leitungsunterbrechung, die die jeweilige Leitung in ihrem Leitungsverlauf aufweist, ist eine Wärmeleitung durch das Material hindurch blockiert. Dadurch, daß im Bereich der Leitungsunterbrechung eine thermische Isolierung angeordnet ist, ist diese Unterbrechung des Wärmetransports durch die Isolierung gewährleistet, die im Bereich der Leitungsunterbrechung eine etwaige sich bildende Brücke durch das in der Leitung befindliche, wärmetransportierende Medium verhindert.

Weitere vorteilhafte Erfindungsmerkmale und Ausgestaltungen ergeben sich aus den Ansprüchen 2 bis 14. Durch den sich im Inneren erstreckenden Leitungseinsatz wird ein über das wärmetransportierende, in der Leitung befindliche Medium evtl. erfolgender Wärmefluß, der die Leitungsunterbrechung überbrücken könnte, zusätzlich verhindert. Von Vorteil ist ferner, daß bei gerade gerichteten Leitungen, z.B. Rohren, ein derartiger innerer Leitungseinsatz schnell und problemlos einbringbar ist, z.B. am Ende der Montage und von außen her.

Eine weitere vorteilhafte Ausbildung eines Wärmespeichers ergibt sich aus Anspruch 15. Bei bekannten Wärmespeichern dieser Art müssen die Leitungen zumindest im wesentlichen vertikal geführt werden, um über eine Thermosiphonwirkung einen selbsttätigen Wärmeaustrag durch das wärmetransportierende Medium aus dem Speicher zu vermeiden, wenn der Speicher aufgeladen ist und sich im Speicherzustand befindet. Derartige Leitungsverläufe stehen einer kostengünstigen Fertigung entgegen. Sie erfordern einen relativ langen Rohrverlauf und somit entsprechenden Materialbedarf. Auch erhöht sich dadurch das Gewicht. Ferner lassen sich vertikal verlaufende Rohre mit endseitigem Rohrknie schwieriger durch Löten an der Innenhülle dicht befestigen.All diese Schwierigkeiten sind durch die Merkmale im Anspruch 15 beseitigt. Vorteilhafte Weiterbildungen dazu enthalten die Ansprüche 16 bis 19. Durch das jeweilige Verschlußglied ist eine Trennung der Betriebszustände Speichern einerseits und Beladen bzw. Entladen des Wärmespeichers andererseits möglich. Ist der Wärmespeicher aufgeladen, so können die Leitungen durch Überführen der Verschlußglieder in ihre Sperrstellung verschlossen werden, so daß dadurch ein Wärmeaustrag durch das wärmetranspoertierende Medium aus dem Speicher verhindert ist. Dadurch sind beliebige Verläufe für die Zufluß- und Rückflußleitung möglich, die auch horizontal verlaufen können. Die Leitungen können somit auf dem kürzesten Weg von der Innenhülle durch den Isolationsraum bis zur Außenhülle geführt werden, so daß der Materialeinsatz für die Leitungen so gering wie möglich ist. Außerdem ermöglicht ein solcher Verlauf der Leitungen eine fertigungstechnisch günstige Gestaltung, da die Leitungen ohne besondere Stützglieder od. dgl. Hilfsmittel mit den übrigen Komponenten des Wärmespeichers in einem Arbeitsgang durch Löten, Schweißen od.dgl. verbunden werden können. Von Vorteil ist ferner, daß für den Wärmespeicher keine besondere Anordnung im Raum zwingend vorgegeben ist. Vielmehr kann der Wärmespeicher im Raum beliebig plaziert werden, so daß man je nach Gegebenheiten eine besondere platzsparende Anordnung z.B. bei einem Kraftfahrzeug wählen kann.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Seitenansicht eines Wärmespeichers,
- Fig. 2: einen Ausschnitt II des Wärmespeichers in Fig. 1 in größerem Maßstab,
- Fig. 3: eine Einzelheit III des Wärmespeichers in Fig. 2 in demgegenüber noch weiter vergrößertem Maßstab.

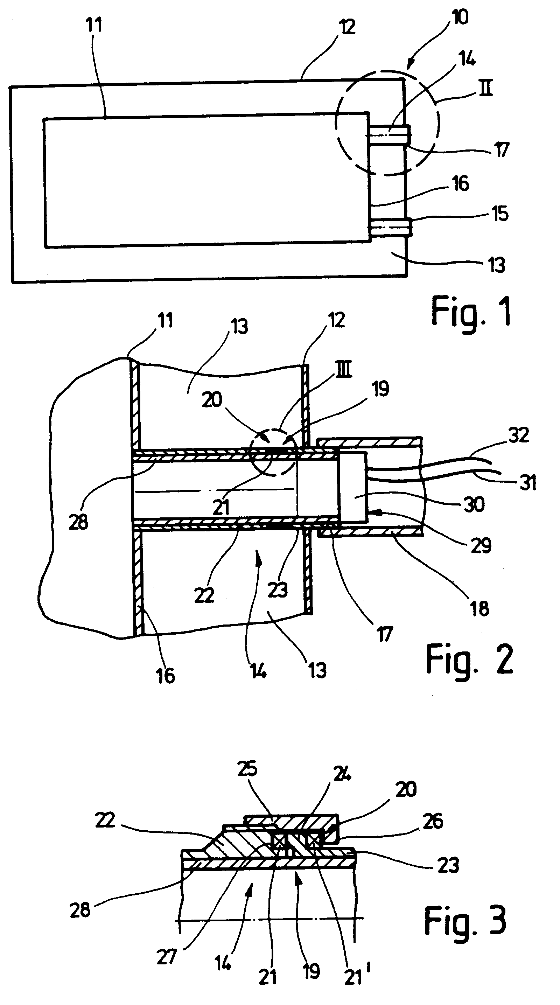

In Fig. 1 ist schematisch ein Wärmespeicher 10, insbesondere ein Latentwärmespeicher, gezeigt, der z.B. zylindrisch gestaltet ist, aber auch jede andere äußere Form aufweisen kann. Der Wärmespeicher 10 kann in beliebiger Ausrichtung im Raum angeordnet werden. Der Wärmespeicher 10 weist im Inneren einen hier nicht besonders dargestellten Speicherkern auf, der die der Wärmespeicherung dienende Einrichtung bildet und von einer nur schematisch angedeuteten Innenhülle 11 umschlossen ist. Die Innenhülle 11 besteht aus Metall, z.B. aus Aluminium. Sie ist mit Abstand von einer Außenhülle 12 umgeben. Aufgrund des Abstandes ist zwischen der Innenhülle 11 und der Außenhülle 12 ein Isolationsraum 13 gebildet, der evakuiert sein kann und/oder geeignetes Isoliermaterial enthalten kann.

Der Wärmespeicher 10 weist ferner zwei von außen durch den Isolationsraum 13 geführte Leitungen 14 und 15 auf, z.B. Rohrleitungen. Von diesen Leitungen dient eine Leitung als Zuflußleitung und die andere Leitung als Rückflußleitung für ein wärmetransportierendes Medium, beispielsweise Kühlwasser einer Brennkraftmaschine.

Beide Leitungen 14 und 15 verlaufen z.B. bei der Darstellung gemäß Fig. 1 bis 3 horizontal. Da der Wärmespeicher 10 aber in jeder beliebigen Ausrichtung im Raum angeordnet sein kann, ergibt sich damit auch für die Leitungen 14 und 15 jeder beliebige Verlauf im Raum. Die Leitungen 14 und 15 münden an einer zugewandten Stirnwand 16 in den von der Innenhülle 11 gebildeten Innenbehälter, wobei die Leitungen 14 und 15 mit der Innenhülle 11 dicht und fest verbunden sind. Wie in Fig. 2 lediglich für die eine Leitung 14 gezeigt ist, ist diese Leitung 14 mit einem Leitungsabschnitt 17 durch die Außenhülle 12 hindurch nach außen geführt, wobei auf diesen Leitungsabschnitt 17 ein Anschlußschlauch 18 aufgebracht sein kann, der das wärmetransportierende Medium führen kann.

Den Leitungen 14 und 15 ist eine Wärmeverlusten entgegenwirkende Einrichtung zugeordnet, die nachfolgend näher erläutert ist. Diese Einrichtung ist gemäß der Erfindung so gestaltet, daß jede Leitung 14, 15 so, wie nachfolgend für die Leitung 14 anhand von Fig. 2 und 3 näher erläutert ist, in ihrem Leitungsverlauf eine Leitungsunterbrechung 19 aufweist und daß im Bereich dieser Leitungsunterbrechung 19 eine thermische Isolierung 20 angeordnet ist. Aufgrund der Leitungsunterbrechung 19 wird eine Wärmeleitung durch die Leitung 14 hindurch vom in der Innenhülle 11 befindlichen Speicherkern nach außen unterbrochen und durch die thermische Isolierung 20 im Bereich der Leitungsunterbrechung 19 unterbunden oder zumindest so gering wie möglich gehalten.

Die thermische Isolierung 20 weist mindestens ein thermisches Isolierelement 21 (Fig. 2) auf. Dieses thermische Isolierelement 21 besteht aus einem Material mit dauerhaft schlechtem Wärmeleitvermögen, wobei dieses Material zugleich dauerhaft mechanisch fest und druckdicht ist. Das thermische Isolierelement 21 besteht hierbei insbesondere aus Kunststoff, der die genannten Eigenschaften hat. Wie sich insbesondere aus Fig. 2 ergibt, kann die Leitungsunterbrechung 19 je Leitung 14, 15 und die thermische Isolierung 20 der Außenhülle 12 benachbart angeordnet sein. Beim Beispiel gemäß Fig. 2 befindet sich die Leitungsunterbrechung 19 und thermische Isolierung 20 mit nur geringem Abstand links und somit in der unmittelbaren Nachbarschaft der Außenhülle 12.

Ersichtlich sind die Leitungen 14, 15, die aus Rohren bestehen können, als kurze Leitungsstücke gestaltet, die geradlinig verlaufen, wobei die Leitungen 14 und 15 auf dem kürzesten Weg direkt von der Innenhülle 11 zur Außenhülle 12 und aus dem Isolationsraum 13 herausgeführt werden. Dadurch ist der Materialaufwand für die Leitungen 14, 15 so gering wie möglich. Es ergeben sich ferner fertigungstechnische Vorteile bei der Herstellung eines Wärmespeichers 10. Da der Verlauf der Leitungen 14, 15 beliebig ist, auch entsprechend Fig. 1 bis 3 horizontal gerichtet sein kann, ergeben sich Vorteile für die räumliche Anordnung des Wärmespeichers 10, z.B. in einem Kraftfahrzeug, ferner Vorteile für den Anschluß der Leitungen 14, 15 an zuführende bzw. abführende Leitungen, wie den Schlauch 18 od. dgl.

Jede Leitung 14, 15 ist, wie am Beispiel der Leitung 14 in Fig. 2 und 3 verdeutlicht ist, aus zwei getrennten Leitungsstücken 22 und 23 gebildet, die z.B. koaxial zueinander ausgerichtet sind und bei denen sich im Trennbereich mindestens ein thermisches Isolierelement 21 befindet. Das Leitungsstück 23 weist einen Leitungsflansch 24 auf (Fig. 3). Auf das andere Leitungsstück 22 ist ein Kupplungselement 25, z.B. eine Kappe, aufgeschraubt, die einen in Axialabstand vom Leitungsflansch 24 befindlichen Rand 26 aufweist. Beidseitig des Leitungsflansches 24 des einen Leitungsstückes 23 ist ein thermisches Isolierelement 21, 21' angeordnet, wobei beim Anziehen des Kupplungselementes 25 dessen Rand 26 am zugewandten Isolierelement 21' zur Anlage kommt und letzteres dadurch an die zugewandte Fläche des Leitungsflansches 24 angedrückt wird, der seinerseits mit der gegenüberliegenden Fläche gegen das andere thermische Isolierelement 21 drückt und dieses an eine zugewandte Stirnfläche 27 des anderen Leitungsstückes 22 anpreßt. Das Leitungsstück 22 verläuft unter Belassung der Leitungsunterbrechung 19 mit axialem Abstand zum anderen Leitungsstück 23. Die Leitungsunterbrechung ist vom thermischen Isolierelement 21 ausgefüllt, welches zugleich auch für das durch die Leitung 14 hindurchzuführende wärmetransportierende Medium ein dichtendes Leitungselement ist, welches die Leitungsunterbrechung 19 druckdicht abdichtet. Das andere thermische Isolierelement 21' verhindert eine Wärmeleitbrücke zwischen dem Leitungsstück 23, insbesondere dessen Leitungsflansch 24, und dem Kupplungselement 25.

In beschriebener Weise sind somit die Leitungsstücke 22, 23 durch das Kupplungselement 25 mechanisch fest verbunden, jedoch mittels der thermischen Isolierelemente 21, 21' voneinander thermisch getrennt.

Die Leitungen 14 und 15 bestehen jeweils aus Metall, insbesondere aus Aluminium, wobei sie jeweils mit der Innenhülle 11, insbesondere deren Stirnwand 16,und/oder Außenhülle 12 durch Löten, Schweißen od.dgl. verbunden sein können. Dies führt zu fertigungstechnischen Vereinfachungen.

Jede Leitung 14 und 15 enthält, wie für die Leitung 14 in Fig. 2 und 3 verdeutlicht ist, im Inneren einen Leitungseinsatz 28, der sich zumindest über den Bereich der Leitungsunterbrechung 19 erstreckt und an der Innenfläche der Leitung 14, insbesondere der Leitungsstücke 22 und 23, anliegt. Der Leitungseinsatz 28 besteht aus einem Material mit schlechtem Wärmeleitvermögen, z.B. aus Kunststoff. Wenn sich der Leitungseinsatz 28 zumindest über den Bereich der Leitungsunterbrechung 19 erstreckt, so verhindert er einen etwaigen Wärmefluß zwischen den beiden Leitungsstücken 22 und 23, der über das in der Leitung 14 befindliche wärmetransportierende Medium erfolgen könnte.

Beim gezeigten Ausführungsbeispiel erstreckt sich der Leitungseinsatz 28 sogar über die gesamte Länge der Leitung 14. Gleiches ist auch bei der anderen Leitung 15 der Fall. Der Leitungseinsatz 28 kann am Ende der Montage des Wärmespeichers 10 z.B. von außen her in die jeweilige Leitung 14 bzw. 15 eingebracht, z.B. eingeschoben, werden. Der Leitungseinsatz 28 verringert auf seiner gesamten Länge die Wärmeübertragung von der Leitung 14 auf das im Inneren der Leitung 14 befindliche Medium sowie umgekehrt von diesem Medium auf die Leitung 14.

Eine weitere vorteilhafte Lösung ist in Fig. 2 verdeutlicht, und hier ebenfalls allein für die eine Leitung 14, wobei gleichermaßen bedarfsweise auch die andere Leitung 15 gestaltet sein kann. Die Leitungen 14 und 15 sind, wie Fig. 2 für die Leitung 14 zeigt, mittels eines jeweiligen Verschlußgliedes 29 bedarfsweise absperrbar, insbesondere dann, wenn der Wärmespeicher 10 aufgeladen ist. Ist nämlich der Wärmespeicher 10 aufgeladen, z.B. nach Beendigung z.B. des Kühlwasserdurchflusses durch den Wärmespeicher 10, z.B. durch Abstellen der Brennkraftmaschine, so kühlt das sich außerhalb des Wärmespeichers 10 befindliche wärmetransportierende Medium ab, so daß die Gefahr eines Wärmeaustrags aus dem Wärmespeicher 10 durch Konvektion durch das Medium droht. Dadurch jedoch, daß jede Leitung 14, 15 bedarfsweise, insbesondere im aufgeladenen Zustand des Wärmespeichers 10, mittels eines zugeordneten Verschlußgliedes 29 absperrbar ist, ist ein derartiger Wärmeaustrag aus dem Wärmespeicher 10 vermieden. Dabei kann der Verlauf der Leitungen 14, 15 so kurz wie möglich und aus Fig. 1 ersichtlich gestaltet werden, wobei die Leitungen 14, 15 auch horizontal verlaufen können. Es versteht sich, daß das jeweilige Verschlußglied 29 dann, wenn der Wärmespeicher 10 beladen bzw. entladen werden soll, entfernt oder so angesteuert wird, daß es den Durchgang durch ihre jeweilige Leitung 14, 15 freigibt.

Das jeweilige Verschlußglied 29 besteht aus einem Material mit schlechtem Wärmeleitvermögen, so daß auch dadurch Wärmeverluste möglichst minimiert sind. Das jeweilige Verschlußglied 29 kann z.B. aus einem Stopfen gebildet sein. In Fig. 2 ist verdeutlicht, daß das jeweilige Verschlußglied 29 aus einem steuerbaren Ventil 30 gebildet ist, zu dem eine Steuerleitung 31 und 32 führt. Das Ventil 30 ist bedarfsweise schließbar bzw. öffenbar. Es ist hierzu über die Steuerleitung 31, 32 in Abhängigkeit einer äußeren Größe steuerbar, insbesondere bei Erreichen des aufgeladenen Zustandes des Wärmespeichers 10 schließbar. Über die Steuerleitung 31, 32 kann auf das Ventil 30 ein Schließbefehl z.B. dann geführt werden, wenn der Kühlwasserdurchfluß durch den Wärmespeicher 10 beendet ist, z.B. bei Abstellen einer Brennkraftmaschine. Ist das Ventil 30 dann geschlossen, so kann durch die Leitung 14 kein Wärmeaustrag aus dem Wärmespeicher 10 durch das Medium erfolgen. Gleiches gilt auch für die Leitung 15. Soll der Wärmespeicher 10 z.B. entladen werden, z.B. zum Zwecke der Motorvorheizung oder der Fahrgastraumheizung eines Kraftfahrzeuges, so wird das Ventil 30 über die Steuerleitungen 31, 32 so angesteuert, daß es geöffnet wird und nun das Medium durch die jeweilige Leitung 14, 15 hindurchströmen kann. Gleiches geschieht dann, wenn der Wärmespeicher 10 beladen werden soll. Das Verschlußglied 29, insbesondere Ventil 30, ermöglicht somit in einfacher Weise eine Trennung der Betriebszustände Speichern einerseits bzw. Be- und Entladen andererseits.

## Patentansprüche

1. Wärmespeicher, insbesondere Latentwärmespeicher, mit einer einen Speicherkern enthaltenden Innenhülle (11), mit einer die Innenhülle (11) unter Bildung eines Isolationsraumes (13) mit Abstand umgebenden Außenhülle (12) und mit zwei von außen durch den Isolationsraum (13) geführten Leitungen (14, 15), deren eine als Zuflußleitung und deren andere als Rückflußleitung für ein wärmetransportierendes Medium dient, wobei den Leitungen (14, 15) eine Wärmeverlusten entgegenwirkende Einrichtung zugeordnet ist,
**dadurch gekennzeichnet,**
daß jede Leitung (14, 15) im Leitungsverlauf eine Leitungsunterbrechung (19) aufweist und daß im Bereich der Leitungsunterbrechung (19) eine thermische Isolierung (20) angeordnet ist.

2. Wärmespeicher nach Anspruch 1,
**dadurch gekennzeichnet,**
daß die thermische Isolierung (20) mindestens ein thermisches Isolierelement (21, 21') aufweist.

3. Wärmespeicher nach Anspruch 2,
**dadurch gekennzeichnet**,
daß das thermische Isolierelement (21, 21') aus einem Material mit schlechtem Wärmeleitvermögen besteht.

4. Wärmespeicher nach Anspruch 2 oder 3,
**dadurch gekennzeichnet**,
daß das thermische Isolierelement (21, 21') aus einem dauerhaft mechanisch festen Material besteht.

5. Wärmespeicher nach einem der Ansprüche 2 bis 4,
**dadurch gekennzeichnet**,
daß das thermische Isolierelement (21, 21') aus einem dauerhaft druckdichten Material besteht.

6. Wärmespeicher nach einem der Ansprüche 2 bis 5,
**dadurch gekennzeichnet**,
daß das thermische Isolierelement (21, 21') aus Kunststoff besteht.

7. Wärmespeicher nach einem der Ansprüche 1 bis 6,
**dadurch gekennzeichnet**,
daß die Leitungsunterbrechung (19) und die thermische Isolierung (20) der Außenhülle (12) benachbart angeordnet sind.

8. Wärmespeicher nach einem der Ansprüche 1 bis 7,
**dadurch gekennzeichnet**,
daß jede Leitung (14, 15) aus zwei getrennten Leitungsstücken (22, 23) gebildet ist, bei denen sich zumindest im Trennbereich mindestens ein thermisches Isolierelement (21, 21') befindet.

9. Wärmespeicher nach einem der Ansprüche 2 bis 8,
**dadurch gekennzeichnet**,
daß beidseitig eines Leitungsflansches (24) eines Leitungsstückes (23), an den das andere Leitungsstück (22) anschließt, ein thermisches Isolierelement (21, 21') angeordnet ist.

10. Wärmespeicher nach einem der Ansprüche 2 bis 9,
**dadurch gekennzeichnet**,
daß die Leitungsstücke (22, 23) durch ein Kupplungselement (25) mechanisch verbunden sind, jedoch mittels thermischer Isolierelemente (21, 21') voneinander thermisch getrennt sind.

11. Wärmespeicher nach einem der Ansprüche 1 bis 10,
**dadurch gekennzeichnet**,
daß die Leitungen (14, 15) jeweils aus Metall, insbesondere aus Aluminium, bestehen.

12. Wärmespeicher nach einem der Ansprüche 1 bis 11,
**dadurch gekennzeichnet**,
daß die Leitungen (14, 15) jeweils mit der Innenhülle (11) und/oder Außenhülle (12) durch Löten, Schweißen od. dgl. verbunden sind.

13. Wärmespeicher nach einem der Ansprüche 1 bis 12,
**dadurch gekennzeichnet**,
daß jede Leitung (14, 15) im Inneren einen sich zumindest über den Bereich der Leitungsunterbrechung (19) erstreckenden, an der Innenfläche vorzugsweise anliegenden Leitungseinsatz (28) aus einem Material mit schlechtem Wärmeleitvermögen, z.B. aus Kunststoff, enthält.

14. Wärmespeicher nach Anspruch 13,
**dadurch gekennzeichnet**,
daß sich der Leitungseinsatz (28) über die ganze Länge der Leitung (14, 15) durchgehend erstreckt.

15. Wärmespeicher, insbesondere Latentwärmespeicher, mit einer einen Speicherkern enthaltenden Innenhülle (11), mit einer die Innenhülle (11) unter Bildung eines Isolationsraumes (13) mit Abstand umgebenden Außenhülle (12) und mit zwei von außen durch den Isolationsraum (13) geführten Leitungen (14, 15), deren eine als Zuflußleitung und deren andere als Rückflußleitung für ein wärmetransportierendes Medium dient, nach einem oder mehreren der vorangehenden Ansprüche,
**dadurch gekennzeichnet**,
daß die Leitungen (14, 15) mittels Verschlußgliedern (29) bedarfsweise, insbesondere im aufgeladenen Zustand des Wärmespeichers (10), absperrbar sind.

16. Wärmespeicher nach Anspruch 15,
**dadurch gekennzeichnet**,
daß die Verschlußglieder (29) aus einem Material mit schlechtem Wärmeleitvermögen gebildet sind.

17. Wärmespeicher nach Anspruch 15 oder 16,
**dadurch gekennzeichnet**,
daß die Verschlußglieder (29) aus Stopfen gebildet sind.

18. Wärmespeicher nach Anspruch 15 oder 16,
**dadurch gekennzeichnet,**
daß die Verschlußglieder (29) aus steuerbaren, insbesondere öffenbaren und schließbaren, Ventilen (30) gebildet sind.

19. Wärmespeicher nach einem der Ansprüche 15 bis 18,
**dadurch gekennzeichnet**,
daß die Verschlußglieder (29), insbesondere Ventile (30), über zumindest eine Steuerleitung (31, 32) in Abhängigkeit äußerer Größen steuerbar sind, insbesondere im aufgeladenen Zustand des Wärmespeichers (10) schließbar sind.

## Claims

1. Heat accumulator, in particular latent heat accumulator, with an internal cladding (11) containing an accumulator core, with an external cladding (12) surrounding the internal cladding (11) with spacing to form an insulating chamber (13) and with two conduits (14, 15) which are guided through the insulating chamber (13) from the exterior, of which one serves as a supply conduit and of which the other serves as a return conduit for a heat-conveying medium, wherein the conduits (14, 15) are allocated a device which counteracts the heat losses, characterized in that each conduit (14, 15) has a conduit interruption (19) in the conduit course and in that a heat insulator (20) is arranged in the region of the interruption in the conduit (19).

2. Heat accumulator according.to Claim 1, characterized in that the heat insulator (20) has at least one heat insulating element (21, 21').

3. Heat accumulator according to Claim 2, characterized in that the heat insulating element (21, 21') consists of a material which is a poor conductor of heat.

4. Heat accumulator according to Claim 2 or 3, characterized in that the heat insulating element (21, 21') consists of a material which is permanently mechanically rigid.

5. Heat accumulator according to one of Claims 2 to 4, characterized in that the heat insulating element (21, 21') consists of a permanently pressure-tight material.

6. Heat accumulator according to one of Claims 2 to 5, characterized in that the heat insulating element (21, 21') consists of plastics material.

7. Heat accumulator according to one of Claims 1 to 6, characterized in that the conduit interruption (19) and the heat insulator (20) of the external cladding (12) are arranged next to one another.

8. Heat accumulator according to one of Claims 1 to 7, characterized in that each conduit (14, 15) is formed from two separate conduit portions (22, 23) in which at least one heat insulating element (21, 21') is located at least in the partition region.

9. Heat accumulator according to one of Claims 2 to 8, characterized in that a heat insulating element (21, 21') is arranged on either side of a conduit flange (24) of a conduit portion (23) to which the other conduit portion (22) is connected.

10. Heat accumulator according to one of Claims 2 to 9, characterized in that the conduit portions (22, 23) are mechanically connected by a coupling element (25) but are thermally separated from one another by heat insulating elements (21, 21').

11. Heat accumulator according to one of Claims 1 to 10, characterized in that the conduits (14, 15) each consist of metal, in particular of aluminium.

12. Heat accumulator according to one of Claims 1 to 11, characterized in that the conduits (14, 15) are each connected to the internal cladding (11) and/or external cladding (12) by soldering, welding or the like.

13. Heat accumulator according to one of Claims 1 to 12, characterized in that each conduit (14, 15) contains in its interior a conduit insert (28) which extends at least over the region of the conduit interruption (19), preferably rests on the internal surface and consists of a material which is a poor conductor of heat, for example of plastics material.

14. Heat accumulator according to Claim 13, characterized in that the conduit insert (28) extends continuously over the entire length of the conduit (14, 15).

15. Heat accumulator, in particular latent heat accumulator, with an internal cladding (11) containing an accumulator core, with an external cladding (12) surrounding the internal cladding (11) with spacing to form an insulating chamber (13) and with two conduits (14, 15) which are guided through the insulating chamber (13) from the exterior and of which one serves as a supply conduit and of which the other serves as a return conduit for a heat-conveying medium, according to one or more of the preceding claims, characterized in that the conduits (14, 15) can be blocked if necessary by closure elements (29) , in particular in the loaded state of the heat accumulator (10).

16. Heat accumulator according to Claim 15, characterized in that the closure elements (29) are formed from a material which is a poor conductor of heat.

17. Heat accumulator according to Claim 15 or 16, characterized in that the closure elements (29) are formed from stoppers.

18. Heat accumulator according to Claim 15 or 16, characterized in that the closure elements (29) are formed from controllable, in particular openable and closable valves (30).

19. Heat accumulator according to one of Claims 15 to 18, characterized in that the closure elements (29), in particular valves (30), are controllable via at least one control conduit (31, 32) as a function of external variables, in particular can be closed in the loaded state of the heat accumulator (10).

## Revendications

1. Accumulateur thermique, en particulier accumulateur de chaleur latente comprenant une gaine intérieure (11) qui contient un tore de mémoire, une gaine extérieure (12) qui enveloppe la gaine intérieure (11) à une certaine distance en formant un espace d'isolement (13) et deux conduites (14, 15) qui traversent l'espace d'isolement (13) en venant de l'extérieur, l'une formant la conduite d'admission et l'autre la conduite d'évacuation d'un agent caloporteur, un dispositif agissant en sens inverse des pertes de chaleur étant attribué aux deux conduites (14, 15),
caractérisé en ce que le circuit de chaque conduite (14, 15) comprend une coupure de conduite (19) et en ce qu'une isolation thermique (20) est montée dans la zone de la coupure de conduite (19).

2. Accumulateur thermique selon la revendication 1, caractérisé en ce que l'isolation thermique (20) présente au moins un élément isolant thermique (21, 21').

3. Accumulateur thermique selon la revendication 2, caractérisé en ce que l'élément isolant thermique (21, 21') est composé d'un matériau présentant de mauvaises propriétés de conductibilité thermique.

4. Accumulateur thermique selon la revendication 2 ou 3, caractérisé en ce que l'élément isolant thermique (21, 21') est composé d'un matériau mécaniquement résistant de manière durable.

5. Accumulateur thermique selon l'une quelconque des revendications 2 à 4, caractérisé en ce que l'élément isolant thermique (21, 21') est composé d'un matériau étanche de manière durable.

6. Accumulateur thermique selon l'une quelconque des revendications 2 à 5, caractérisé en ce que l'élément isolant thermique (21, 21') est composé d'une matière synthétique.

7. Accumulateur thermique selon l'une quelconque des revendications 1 à 6, caractérisé en ce que la coupure de conduite (19) et l'isolation thermique (20) sont contiguës à la gaine extérieure (12).

8. Accumulateur thermique selon l'une quelconque des revendications 1 à 7, caractérisé en ce que chaque conduite (14, 15) est formée de deux tronçons de tube séparés (22, 23), sur lesquels sont disposés, du moins dans la zone de séparation, au moins un élément isolant thermique (21, 21').

9. Accumulateur thermique selon l'une quelconque des revendications 2 à 8, caractérisé en ce qu'un élément isolant thermique (21, 21') est disposé de part et d'autre d'une collerette (24) d'un tronçon de tube (23), auquel se raccorde l'autre tronçon de tube (22).

10. Accumulateur thermique selon l'une quelconque des revendications 2 à 9, caractérisé en ce que les tronçons de tube (22, 23) sont raccordés mécaniquement par un élément d'assemblage (25) , mais sont séparés thermiquement l'un de l'autre par des éléments isolants thermiques (21, 21').

11. Accumulateur thermique selon l'une quelconque des revendications 1 à 10, caractérisé en ce que les conduites (14, 15) sont des conduites en métal, en particulier en aluminium.

12. Accumulateur thermique selon l'une quelconque des revendications 1 à 11, caractérisé en ce que les conduites (14, 15) sont raccordées chacune à la gaine intérieure (11) et/ou à la gaine extérieure (12) par brasage, soudage ou un procédé analogue.

13. Accumulateur thermique selon l'une quelconque des revendications 1 à 12, caractérisé en ce que chaque conduite (14, 15) contient à l'intérieur un insert (28), disposé de préférence contre la paroi intérieure et qui s'étend au moins dans la zone de la coupure de conduite (19), ledit insert se composant d'un matériau présentant de mauvaises propriétés de conductibilité thermique, une matière synthétique, par exemple.

14. Accumulateur thermique selon la revendication 13, caractérisé en ce que l'insert de la conduite (28) s'étend sur tout le long de la conduite (14, 15).

15. Accumulateur thermique, en particulier accumulateur de chaleur latente, comprenant une gaine intérieure (11) qui contient un tore de mémoire, une gaine extérieure (12) qui enveloppe la gaine intérieure (11) à une certaine distance en formant un espace d'isolement (13), et deux conduites (14, 15), qui traversent l'espace d'isolement (13) en venant de l'extérieur, l'une formant la conduite d'admission et l'autre la conduite d'évacuation d'un agent caloporteur, un dispositif agissant en sens inverse des pertes de chaleur étant attribué aux deux conduites (14, 15), selon l'une quelconque des revendications précédentes, caractérisé en ce qu'il est possible, en cas de besoin, de fermer les conduites (14, 15) avec des obturateurs (29), en particulier à l'état chargé de l'accumulateur thermique (10).

16. Accumulateur thermique selon la revendication 15, caractérisé en ce que les obturateurs (29) sont composés d'un matériau présentant de mauvaises propriétés de conductibilité thermique.

17. Accumulateur thermique selon la revendication 15 ou 16, caractérisé en ce que les obturateurs (29) sont des bouchons.

18. Accumulateur thermique selon la revendication 15 ou 18, caractérisé en ce que les obturateurs (29) sont des soupapes (30) qui peuvent être commandées, en particulier pour l'ouverture et la fermeture.

19. Accumulateur thermique selon l'une quelconque des revendications 15 à 16, caractérisé en ce que les obturateurs (29), en particulier les soupapes (30), sont commandés en fonction de valeurs externes par l'intermédiaire d'au moins une ligne de commande (31, 32) , sont notamment fermés à l'état chargé de l'accumulateur thermique (10).
